# EUROPEAN PATENT APPLICATION

(11) **EP 3 279 606 A1**
(43) Date of publication of application: **07.02.2018**
(21) Application number: 17001269.4
(22) Date of filing: 25.07.2017
(51) Int. Cl.: G01B 11/25, G06T 7/521

(54) **PROJECTION APPARATUS, MEASUREMENT APPARATUS, SYSTEM, AND METHOD OF MANUFACTURING PRODUCTS**

(30) Priority: 03.08.2016 JP 2016153213
(71) Applicant: CANON KABUSHIKI KAISHA, Tokyo (JP)
(72) Inventor: KITAMURA, Hideaki, Tokyo (JP)
(74) Representative: WESER & Kollegen

(57) **Abstract**

The present invention provides a projection apparatus that projects line-light onto an object by a projection optical system (14), the apparatus comprising a generation unit (13) configured to generate line-light by reflecting a portion of incident light, and an optical member (12) having a reflecting surface configured to reflect the line-light generated by the generation unit to guide the line-light to the projection optical system, wherein the generation unit and the optical member are arranged so that an optical axis of the incident light to the generation unit, an optical axis of light incident on the reflecting surface, and an optical axis of light incident on the projection optical system are included in the same plane, and wherein the generation unit generates the line-light such that a direction orthogonal to the plane is a longitudinal direction of the line-light.

## Description

### BACKGROUND OF THE INVENTION

### Field of the Invention

The present invention relates to a projection apparatus, a measurement apparatus, a system, and a method for manufacturing a product.

### Description of the Related Art

There is a known measurement apparatus for measuring a shape of a target object (object) that uses a pattern projection method. The pattern projection method is a method for measuring a shape of a target object by detecting a distortion in the projection pattern that arises in accordance with the shape of the target object from an image obtained by capturing the target object on which a patterned light (line-light) is projected.

In the pattern projection method, reducing a numerical aperture (NA) of a projection optical system so that a depth of focus of the line-light projected on the target object becomes larger in order to reduce blur of the line-light in a depth direction of the target object is preferred. However, when the numerical aperture (NA) is reduced, correspondingly, the amount of light (light intensity) of the line-light projected on the target object becomes less and the contrast and may be reduced. In Japanese Patent Laid-Open No. H7-71930 is proposed a technique for achieving good depth of focus and amount of light for line-light by, in a projection apparatus that projects the line-light on a target object, making the depth of focus in a longitudinal direction of the line-light shallower and arranging an aperture for making the depth of focus deeper in a shorter side direction of the line-light.

In projection apparatuses of recent years, to make the apparatus more compact, a generation unit (a digital mirror device for example) for generating the line-light by reflecting light and an optical member for guiding the line-light to a projection optical system by reflecting the line-light generated by the generation unit can be arranged. In such projection apparatuses, if the direction of a line-light generated by the generation unit and the direction of the reflection of the light in the optical member are not considered, an increase of the amount of light of a line-light projected on a target object is restricted and it becomes difficult to cause the contrast of the line-light to increase sufficiently.

### SUMMARY OF THE INVENTION

The present invention provides a technique that is advantageous at achieving good depth of focus and amount of light of a line-light projected on an object, for example.

The present invention in its first aspect provides a projection apparatus as specified in claims 1 to 8.

The present invention in its second aspect provides a measurement apparatus as specified in claim 9.

The present invention in its third aspect provides a system as specified in claim 10.

The present invention in its fourth aspect provides a method for manufacturing a product as specified in claim 11.

Further features of the present invention will become apparent from the following description of exemplary embodiments with reference to the attached drawings.

### BRIEF DESCRIPTION OF THE DRAWINGS

FIG. 1A is a schematic view illustrating a measurement apparatus.
FIG. 1B is a schematic view illustrating a configuration of a projection unit.
FIG. 2A is a view illustrating a relationship between incident light and reflected light in a generation unit.
FIG. 2B is a view illustrating a relationship between incident light and reflected light in the generation unit.
FIG. 3 is a view for describing reflectance on a reflecting surface of an optical member.
FIG. 4A is a view illustrating an example arrangement between the generation unit and the optical member.
FIG. 4B is a view illustrating an example arrangement between the generation unit and the optical member.
FIG. 4C is a view illustrating an example arrangement between the generation unit and the optical member.
FIG. 4D is a view illustrating an example arrangement between the generation unit and the optical member.
FIG. 5A is a view illustrating an example arrangement between the generation unit and a mirror.
FIG. 5B is a view illustrating an example arrangement between the generation unit and a mirror.
FIG. 6A is a view illustrating an arrangement relationship of an emission unit having a plurality of light sources, an illumination optical system, the mirror, and the generation unit.
FIG. 6B is a view illustrating an arrangement relationship of an emission unit having a plurality of light sources, the illumination optical system, the mirror, and the generation unit.
FIG. 7 is a view illustrating a control system including a measurement apparatus and a robot arm.

### DESCRIPTION OF THE EMBODIMENTS

Exemplary embodiments of the present invention will be described below with reference to the accompanying drawings. Note that the same reference numerals denote the same members throughout the drawings, and a repetitive description thereof will not be given.

### <First Embodiment>

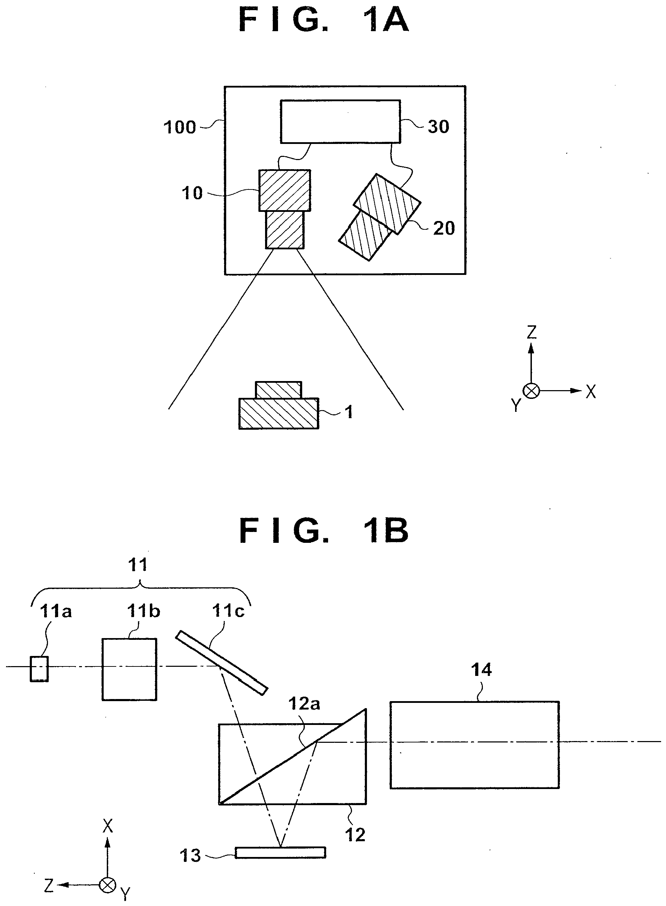

Description regarding a measurement apparatus 100 of a first embodiment according to the present invention is given with reference to FIG. 1A. FIG. 1A is a schematic view illustrating a measurement apparatus 100 of the first embodiment. The measurement apparatus 100 of the first embodiment includes, for example, a projection unit 10 (projection apparatus) for projecting patterned light onto a target object 1 (object), a capturing unit 20 for capturing the target object 1 onto which the patterned light is projected, and a processing unit 30, and the measurement apparatus 100 measures the shape of the target object 1 by using a pattern projection method.

The projection unit 10 generates a patterned light having only bright regions or striped bright/dark regions (specifically, a patterned light having one or a plurality of line-light) and projects the generated patterned light (line-light) onto the target object 1. The capturing unit 20 includes an image sensor in which a CCD or a CMOS sensor is configured for example and captures the target object 1 onto which the patterned light is projected. The processing unit 30 is configured by a computer having a CPU, memory, and the like for example, and derives, from an image obtained by the capturing unit 20, shape information of the target object 1 by detecting a distortion of the projection pattern that occurs in accordance with the shape of the target object 1.

Here, description is given regarding a configuration of the projection unit 10 with reference to FIG. 1B. The projection unit 10 can include an emission unit 11 that emits light, an optical member 12, a generation unit 13, and a projection optical system 14 for example, as illustrated in FIG. 1B. Also, the emission unit 11 can include a light source 11a, an illumination optical system 11b, and a mirror 11c.

The light emitted from the light source 11a is incident on the mirror 11c via the illumination optical system 11b and after reflecting off the mirror 11c, passes through a reflecting surface 12a of the optical member 12 and is incident on the generation unit 13. The illumination optical system 11b can be configured to achieve a Kohler illumination of the generation unit 13. The generation unit 13 is arranged at a position forming an imaging plane of the illumination optical system 11b and an object plane of the projection optical system 14 and generates line-light by reflecting a portion of the light emitted from the emission unit 11 (illumination optical system 11b). The line-light generated by the generation unit 13 is reflected by the reflecting surface 12a of the optical member 12 and enters the projection optical system 14, and is projected on the target object 1. The optical member 12 of the present embodiment includes a critical angle prism having the reflecting surface 12a which reflects light by reflectance in accordance with the angle of incidence of the light (specifically, transmitting light in accordance with the angle of incidence of the light). Also, the optical member 12 including the critical angle prism can be arranged (configured) so that the light reflected by the mirror 11c passes through the reflecting surface 12a and the line-light generated by the generation unit 13 is guided to the projection optical system 14 by being reflected by the reflecting surface 12a.

The generation unit 13 may be configured to include, for example, an optical element in which a plurality of mirrors are arranged and each mirror is configured to be able to rotate around a rotation axis (a digital mirror device for example), a liquid crystal element, or the like, and to be able to change the length of the shorter side direction of the line-light. By this, the projection unit 10 can sequentially project a plurality of types of line-light of mutually differing lengths in the shorter side direction onto the target object 1. Accordingly, the measurement apparatus 100 (processing unit 30) can capture, by the capturing unit 20, the target object 1, respectively when each of the plurality of types of line-light are sequentially projected thereon by the projection unit 10, and can derive with good precision the shape of the target object 1 from a plurality of images obtained accordingly.

In the projection unit 10, with such a configuration, it is possible to derive an increased depth of focus of a line-light projected on the target object 1 (hereinafter referred to as a projected line-light) because blur of the line-light in the depth direction of the target object 1 is reduced. Along with this, it is also possible to derive greater contrast by increasing the amount of light of the projected line-light. For this reason, it is preferred that in the projection unit 10, the numerical aperture (NA) of the projection optical system 14 is reduced as much as possible in the shorter side direction of the projected line-light and that the numerical aperture of the projection optical system 14 is increased as much as possible in the longitudinal direction of the projected line-light.

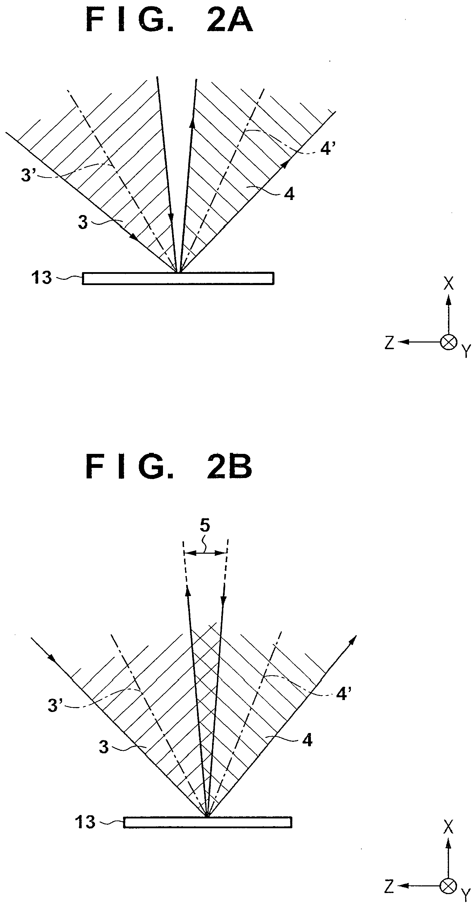

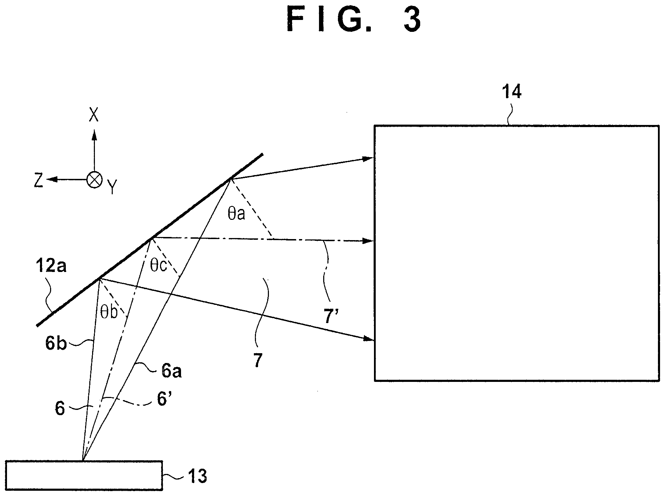

However, if, in the projection unit 10, the orientation of a line-light generated by the generation unit 13 and the direction of the reflection of the light in the optical member 12 (reflecting surface 12a) are not considered, an increase of the amount of light of projected line-light will be restricted which could cause it to be difficult to sufficiently increase the contrast of the projected line-light. Description is given regarding this reason with reference to FIG. 2A, FIG. 2B, and FIG. 3.

In the description below, the longitudinal direction of the projected line-light is a first direction (Y direction) orthogonal to an optical axis (Z direction) of the projection optical system 14 and the shorter side direction is a direction (X direction) orthogonal to the optical axis of the projection optical system 14 and the first direction. In such a case, the first direction (Y direction) can be defined as a direction in which the numerical aperture should be larger than the second direction (X direction) in the projection optical system 14. Thus, it is preferred that the first direction is defined as a direction in which the numerical aperture should be the largest among directions orthogonal to the optical axis of the projection optical system 14. Also, in the projection unit 10, configuration may be taken to arrange an aperture (aperture stop and NA stop) for, in the pupil plane of the projection optical system, forming an opening in which a first direction is the longitudinal direction and a second direction is the shorter side direction, specifically, for increasing the numerical aperture of the first direction to be larger than the numerical aperture of the second direction.

Firstly, description is given regarding the reason that an increase of the amount of light of the projected line-light is restricted by the orientation of the line-light generated by the generation unit 13 with reference to FIG. 2A and FIG. 2B. FIG. 2A and FIG. 2B are views illustrating a relationship between incident light 3 that is incident on the generation unit 13 and reflected light 4 (line-light generated by the generation unit 13) reflected by the generation unit 13. In FIG. 2A and FIG. 2B, an optical axis 3' of the incident light 3 (center axis of the spread of light) and an optical axis 4' (center axis of the spread of light) of the reflected light 4 (line-light) are also illustrated. For example, the optical axis 3' (center axis of the spread of light) of the incident light 3 represents light that passed through the optical axis of the emission unit 11 (illumination optical system 11b).

For example, as illustrated in FIG. 2A, a case in which the incident light 3 that was emitted from the emission unit 11 (illumination optical system 11b) and is incident on the generation unit 13, and the reflected light 4 that was reflected by the generation unit 13 do not overlap is envisioned. In such a case, even if line-light is generated by the generation unit 13 such that a direction parallel to a plane (XZ plane (paper surface)) including the optical axis 3' of the incident light 3 and the optical axis 4' of the reflected light 4 is the longitudinal direction, it is possible to cause all of the line-light generated by the generation unit 13 to enter the projection optical system 14. However, a portion 5 in which the incident light 3 and the reflected light 4 overlap may arise as illustrated in FIG. 2B when the numerical aperture of the illumination optical system 11b is increased in order to cause the amount of light of the projected line-light to increase by increasing the numerical aperture of the projection optical system 14 in a direction parallel to the XZ plane. The portion 5 of the reflected light 4 returns to the illumination optical system 11b and therefore cannot enter the projection optical system 14. In other words, a direction parallel to the XZ plane is inappropriate as the longitudinal direction of the line-light generated by the generation unit 13 because size of the numerical aperture of the projection optical system 14 is restricted for that direction even if the numerical aperture of the illumination optical system 11b is increased. Here, the numerical aperture of the projection optical system 14 can be defined as a range of incident angles of light that are possible in the projection optical system 14.

Meanwhile, for a direction orthogonal to the XZ plane, the size of the numerical aperture of the projection optical system 14 is not restricted even if the numerical aperture of the illumination optical system 11b is increased. In other words, it is possible to increase the numerical aperture of the projection optical system 14 by an amount by which the numerical aperture of the illumination optical system 11b is increased. Accordingly, the generation unit 13 of the present embodiment is arranged so that the direction (Y direction) orthogonal to a plane (XZ plane) including the incident light 3 that is incident on the generation unit 13 and the reflected light 4 reflected by the generation unit 13 is a first direction in which the numerical aperture of the projection optical system 14 is to be increased. Also, the generation unit 13 generates line-light so that this direction orthogonal to the plane is the longitudinal direction of the line-light.

Next, description is given regarding the reason that an increase of the amount of light of the projected line-light is restricted by the direction in which the light reflects in the optical member 12 with reference to FIG. 3. FIG. 3 is a view for describing reflectance on the reflecting surface 12a of the optical member 12. Reflectance of the light can change in accordance with an angle of incidence θi of the light on the reflecting surface 12a in the critical angle prism used as the optical member 12. For example, the reflecting surface 12a of the critical angle prism is configured so as to reflect all light when the incident angle θi of the light is greater than or equal to a critical angle θc, and so that the reflectance becomes smaller as the incident angle θi of the light becomes smaller than the critical angle θc. Here, "reflect all" can be defined as a reflection of light in which the reflectance of the light is greater than or equal to 95%.

In such a critical angle prism, a case is envisioned in which line-light, for which the direction parallel to the plane (XZ plane (paper surface)) including an optical axis 6' of incident light 6 that is incident on the reflecting surface 12a and an optical axis 7' of reflected light 7 reflected by the reflecting surface 12a is made to be the longitudinal direction, is caused to be incident on the reflecting surface 12a. In such a case, as illustrated in FIG. 3 for example, one side 6a of the line-light (incident light 6) generated by the generation unit 13 may be incident on the reflecting surface 12a at an incident angle θa which is larger than a critical angle θc and the other side 6b may be incident on the reflecting surface 12a at an incident angle θb which is smaller than the critical angle θc. Specifically, in the other side 6b of the line-light, not all of the light can be reflected and a reduction of the amount of light by the reflecting surface 12a may result because it is not incident on the reflecting surface 12a at an incident angle θi that is greater than or equal to the critical angle θc.

Accordingly, the optical member 12 of the present embodiment is arranged so that the direction (Y direction) orthogonal to a plane (XZ plane) including the optical axis 6' of the incident light 6 on the reflecting surface 12a and the optical axis 7' of the reflected light 7 reflected on the reflecting surface 12a is a first direction in which the numerical aperture of the projection optical system 14 is to be increased. The optical axis 6' of the incident light 6 and the optical axis 7' of the reflected light 7 can respectively be defined as center axes of a spread of light. Also, the optical member 12 is arranged so that a direction orthogonal to the plane is the longitudinal direction of the line-light generated by the generation unit 13. It is possible that, when line-light generated by the generation unit 13 is incident on the reflecting surface 12a, the incident angle θi is fixed in the longitudinal direction of the line-light by thus arranging the optical member 12. Specifically, it is possible that the reflectance in the reflecting surface 12a is fixed in the longitudinal direction of the line-light. Also, the optical member 12 may be arranged such that the line-light generated by the generation unit 13 is all reflected by the reflecting surface 12a, specifically, such that the line-light is incident on the reflecting surface 12a at the incident angle θi for which the reflectance of light is greater than or equal 95%. By this, reduction of the amount of light of the line-light generated by the generation unit 13 by the reflecting surface 12a of the optical member 12 is restricted as much as possible and the line-light can be caused to enter the projection optical system 14 with better efficiency. The optical axis 7' (center axis of the spread of light) of the reflected light 7 reflected in the reflecting surface 12a is light that passes through the optical axis of the projection optical system 14 for example.

In this way, the generation unit 13 and the optical member 12 are arranged so that the optical axis of the light incident on the generation unit 13, the optical axis of the light incident of the reflecting surface 12a by reflecting off the generation unit 13, and the optical axis of the light that enters the projection optical system 14 by reflecting off the reflecting surface 12a are included in the same plane. The optical axis of the light incident on the generation unit 13, the optical axis of the light incident on the reflecting surface 12a, and the optical axis of the light that enters the projection optical system 14 can be defined as the center axes of the spread of respective light. Here, the generation unit 13 and the optical member 12 can be arranged so that a direction orthogonal to the plane is a first direction in which the numerical aperture of the projection optical system 14 is to be increased. Also, the generation unit 13 generates line-light so that this direction orthogonal to the plane is the longitudinal direction of the line-light. By this, it is possible to achieve good depth of focus and amount of light of the projected line-light in the projection unit 10 which is made to be compact by the arrangement of the generation unit 13 and the optical member 12.

Here, description is given regarding an arrangement of the generation unit 13 including an optical element (digital mirror device) in which a plurality of mirrors are arranged two-dimensionally and each mirror is configured to be able to rotate around a rotation axis. It is preferred that the generation unit 13 including such optical elements be arranged so that the rotation axes of the plurality of mirrors are in a direction orthogonal to the plane including the optical axis of the light incident on the generation unit 13 and the optical axis of the light reflected by the generation unit 13. It is possible to easily generate line-light whose longitudinal direction is a direction orthogonal to the plane by arranging the generation unit 13 in this way.

### <Second Embodiment>

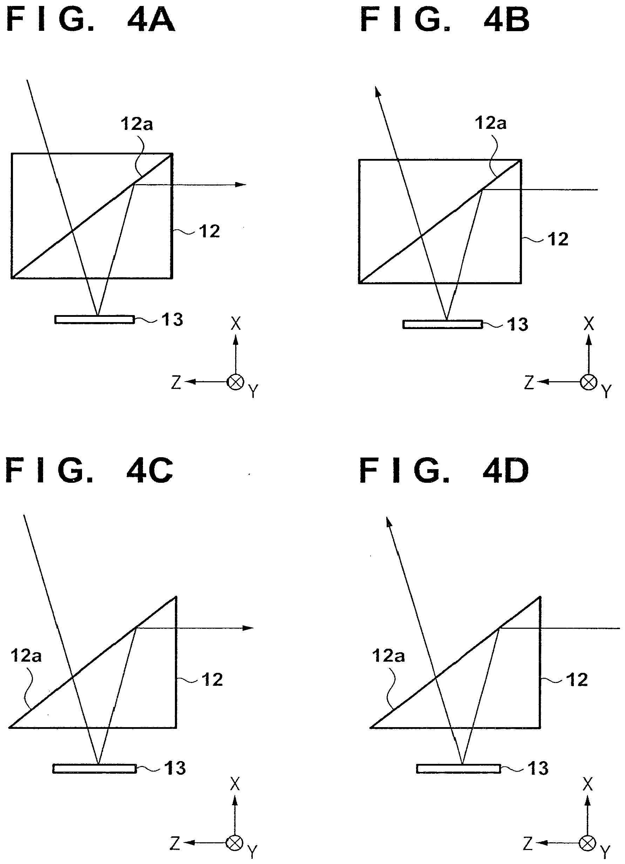

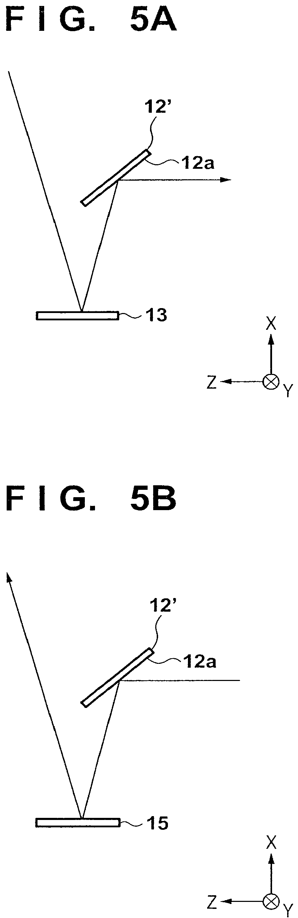

In the projection unit 10 of the first embodiment, configuration is taken such that light which passed through the reflecting surface 12a of the optical member 12 is incident on the generation unit 13 and line-light generated by the generation unit 13 enters the projection optical system 14 by reflecting off the reflecting surface 12a of the optical member 12 as illustrated in FIG. 4A. However, limitation is not made to this. For example, as illustrated in FIG. 4B, configuration may be taken such that light reflected by the reflecting surface 12a of the optical member 12 is incident on the generation unit 13 and line-light generated by the generation unit 13 enters the projection optical system 14 passing through the reflecting surface 12a of the optical member 12. Also, although a critical angle prism configured by bonding two members is used in the optical member 12 illustrated in FIG. 4A and FIG. 4B, a critical angle prism configured by one member may be used as illustrated in FIG. 4C and FIG. 4D. Furthermore, a mirror 12' may be used in place of the critical angle prism in the optical member 12 of the projection unit 10 as illustrated in FIG. 5A and FIG. 5B.

### <Third Embodiment>

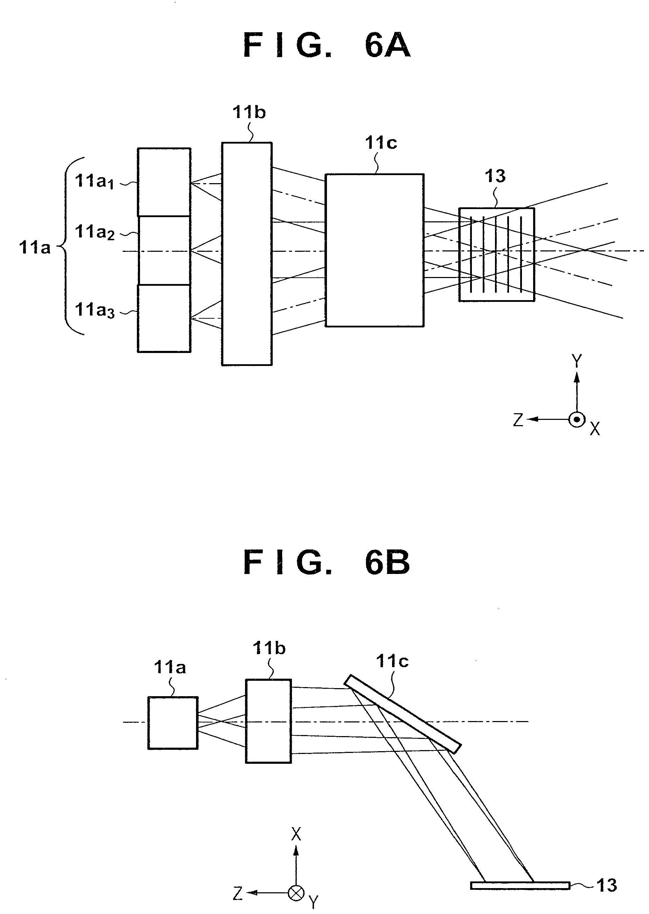

In a third embodiment, description is given regarding another example of a configuration of the emission unit 11 with reference to FIG. 6A and FIG. 6B. FIG. 6A and FIG. 6B are views illustrating an arrangement relationship between the emission unit 11 and the generation unit 13, and FIG. 6A is a view from a perspective of the X direction and FIG. 6B is a view from the perspective of the Y direction.

The emission unit 11 of the present embodiment can be configured so that it includes a plurality of light sources 11a (three light sources 11a₁ to 11a₃ for example) in order to increase the amount of light (light intensity) of the projected line-light and so that light emitted from the plurality of light sources 11a is irradiated overlappingly on the generation unit 13. Also, the plurality of light sources 11a can be arranged so that a second plane including an optical axis of light that is emitted from each light source 11a and is incident of the generation unit 13 is parallel with the longitudinal direction (first direction) of the line-light to be generated by the generation unit 13. Specifically, the second plane may be a plane including the optical axis of light from each light source 11a between the mirror 11c and the generation unit 13. It is possible to cause the respective light emitted from each light source 11a and reflected by the generation unit 13 to be incident on the reflecting surface 12a of the optical member 12 at the same incident angle θi as each other by thus arranging the plurality of light sources 11a. In other words, it is possible to restrict the amount of light of the light emitted from each light source 11a and reflected by the generation unit 13 from being reduced due to the reflecting surface 12a of the optical member 12 as much as possible and to cause the light to be incident on the projection optical system 14 with good efficiency.

### <Fourth Embodiment>

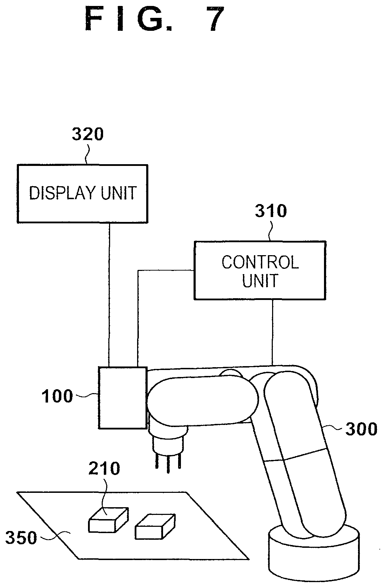

The measurement apparatus described above can be used in a state in which it is supported by a support member. In the present embodiment, description is given regarding a control system equipped and used in a robot arm 300 (gripping apparatus) as in FIG. 7 as an example. The measurement apparatus 100 projects patterned light onto a target object 210 that is arranged on a support 350 and captures the target object 210, and thereby obtains an image. Also, a control unit of the measurement apparatus 100 or a control unit 310 which obtained image data from the control unit of the measurement apparatus 100 derives a position and an orientation of the target object 210, and the control unit 310 obtains information of the derived position and orientation. The control unit 310 controls the robot arm 300 by sending driving instructions to the robot arm 300 based on the information (result of measurement) of the position and orientation. The robot arm 300 holds the target object 210 by a distal end robot hand or the like (grip unit), and causes movement such as translation or rotation. Furthermore, it is possible that a product configured by a plurality of parts, for example, an electronic circuit board, a machine, or the like is manufactured by the target object 210 being assembled with other parts by the robot arm 300. Also, it is possible to manufacture products by processing the moved target object 210. The control unit 310 has an arithmetic apparatus such as a CPU and a storage apparatus such as a memory. Note, the control unit which controls the robot may be arranged to be external to the control unit 310. Also, measurement data measured by the measurement apparatus 100 or obtained images may be displayed on a display unit 320 such as a display.

### <Other Embodiments>

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A projection apparatus that projects line-light onto an object by a projection optical system (14), the apparatus comprising:
a generation unit (13) configured to generate line-light by reflecting a portion of incident light; and
an optical member (12) having a reflecting surface configured to reflect the line-light generated by the generation unit to guide the line-light to the projection optical system,
wherein the generation unit and the optical member are arranged so that an optical axis of the incident light to the generation unit, an optical axis of light reflected by the generation unit and incident on the reflecting surface, and an optical axis of light reflected by the reflecting surface and incident on the projection optical system are included in the same plane, and
wherein the generation unit generates the line-light such that a direction orthogonal to the plane is a longitudinal direction of the line-light.

2. The projection apparatus according to claim 1, wherein
the reflecting surface of the optical member reflects light with a reflectance according to an incident angle of the light, and
the optical member is arranged so that a line-light generated by the generation unit is incident on the reflecting surface at an incident angle at which a reflectance of the light is greater than or equal to 95%.

3. The projection apparatus according to claim 2, further comprising an emission unit (11) configured to emit light,
wherein the optical member is configured so that the light emitted from the emission unit passes through the reflecting surface and is incident on the generation unit.

4. The projection apparatus according to any one of claims 1 to 3, wherein the projection optical system includes an aperture for making a numerical aperture in a first direction orthogonal to the plane larger than a numerical aperture in a second direction orthogonal to the first direction, the first and second directions being respectively orthogonal to the optical axis of the projection optical system.

5. The projection apparatus according to any one of claims 1 to 4, wherein the projection optical system projects the line-light generated by the generation unit onto the object.

6. The projection apparatus according to any one of claims 1 to 5, further comprising an emission unit configured to emit light,
wherein the emission unit includes a plurality of light sources and is configured so that light emitted from each of the plurality of light sources is irradiated overlappingly onto the generation unit, and
wherein the plurality of light sources are arranged so that a second plane that includes an optical axis of light emitted from each of the plurality of light sources is parallel to the longitudinal direction of the line-light generated by the generation unit.

7. The projection apparatus according to any one of claims 1 to 6, wherein the generation unit is configured to be able to change the length of a shorter side direction of the generated line-light.

8. The projection apparatus according to any one of claims 1 to 7, wherein the generation unit includes an optical element, in which a plurality of mirrors are arranged and each mirror is configured to be able to rotate around each rotation axis, and is arranged so that the rotation axes of the plurality of mirrors are in a direction orthogonal to the same plane.

9. A measurement apparatus that measures a shape of a target object, comprising:
a projection apparatus (10) that projects line-light onto the target object by a projection optical system (14);
an image capturing unit (20) configured to capture the target object onto which the line-light is projected by the projection apparatus; and
a processing unit (30) configured to determine shape information of the target object based on an image obtained by the image capturing unit,
wherein the projection apparatus is a projection apparatus according to any one of claims 1 to 8.

10. A system, comprising:
a measurement apparatus (100) according to claim 9 that measures a shape of a target object; and
a robot (300) configured to hold and move the target object based on a result of the measurement by the measurement apparatus.

11. A method for manufacturing a product, comprising:
measuring a target object by using a measurement apparatus (100) according to claim 9; and
manufacturing a product by processing the target object based on a result of the measurement,
wherein the measurement apparatus measures a shape of a target object.
